# EUROPÄISCHE PATENTSCHRIFT

(11) **EP 2 526 751 B1**
(45) Veröffentlichungstag und Bekanntmachung des Hinweises auf die Patenterteilung: **24.12.2014**
(21) Anmeldenummer: 12003774.2
(22) Anmeldetag: 12.05.2012
(51) Int. Cl.: A01B 61/02, A01D 67/00, A01D 75/18

(54) **Mähmaschine**
Mowing machine
Faucheuse

(30) Priorität: 27.05.2011 DE 102011103348
(43) Veröffentlichungstag der Anmeldung: 28.11.2012
(73) Patentinhaber: Maschinenfabrik Bernard Krone GmbH, 48480 Spelle (DE)
(72) Erfinder: Horstmann, Josef, Dr.-Ing., 49479 Ibbenbüren (DE)

(56) Entgegenhaltungen:
- EP-A1- 1 925 198
- DE-A1- 10 149 364
- DE-A1-102010 022 246
- NL-A- 9 002 867

## Beschreibung

Die vorliegende Erfindung betrifft eine Mähmaschine zum Mähen von landwirtschaftlichem Halm- und Blattgut gemäß dem Oberbegriff des Anspruchs 1. Derartige Mähmaschinen sind aus der Praxis in zahlreichen Ausführungsformen bekannt. Dazu kann die Mäheinrichtung der Mähmaschine seitlich von dem landwirtschaftlichen Trägerfahrzeug über die Oberfläche der Feld- oder Wiesenfläche geführt werden, während für den Transport der Mähmaschine auf der Straße die Mäheinrichtung in eine Transportstellung verbracht wird, in der sich die Mäheinrichtung in im wesentlichen vertikaler Erstreckung in etwa oberhalb ihrer Trageinrichtung befindet. In der heutigen auf große Arbeitsbreiten ausgerichteten Landwirtschaft kennt man aber auch die sogenannten Triple-Kombinationen, bei denen an einem landwirtschaftlichen Trägerfahrzeug zunächst ein Frontmähwerk die Fahrspur des Trägerfahrzeuges bearbeitet und sodann zwei weitere, im Heckbereich des Trägerfahrzeuges angeordnete Mäheinheiten seitlich neben der Mähspur des Frontmähwerkes zwei weitere Mähspuren anlegen.

Eine Mähmaschine der vorstehend beschriebenen Gattung ist in der DE 101 49 364 A1 bekannt geworden und umfasst eine Mäheinrichtung, die in der Arbeits- und Betriebsstellung seitlich von einem landwirtschaftlichen Trägerfahrzeug zum Mähen von landwirtschaftlichem Halm- und Blattgut über eine Feld- oder Wiesenfläche geführt werden kann. Zum Anbau an eine Dreipunkthubeinrichtung des landwirtschaftlichen Trägerfahrzeuges weist die Mähmaschine ein Dreipunktanbaueinrichtung auf, bei der an der der Mäheinrichtung abgewandten Seite der Dreipunktanbaueinrichtung die Anlenkstelle zur Aufnahme eines Unterlenkers der Dreipunkthubeinrichtung nachgiebig ausgeführt ist. Diese nachgiebige Ausgestaltung dient als Anfahrsicherung gegen Steine im Boden oder dgl. Hindernissen. Ein Mangel dieser Mäheinrichtung ist darin zu sehen, dass Einstellmöglichkeiten des Abstandes der Mäheinrichtung an unterschiedliche Trägerfahrzeuge nicht gegeben sind.

Aufgabe der Erfindung ist es daher, eine Mähmaschine vorzuschlagen, bei der die Mängel aus dem Stand der Technik vermieden werden und damit einhergehend mit geringst möglichem konstruktiven Aufwand eine zuverlässige Anfahrsicherung und effektive Anpassungsmöglichkeiten der Mähmaschine an verschiedenste landwirtschaftliche Trägerfahrzeuge bereit gestellt werden.

Erfindungsgemäß wird diese Aufgabe durch die kennzeichnenden Merkmale des Anspruchs 1 gelöst. Vorteilhafte Weiterbildungen der Erfindung sind Gegenstand der weiteren Ansprüche.

Gemäß der Erfindung wird eine Mähmaschine mit zumindest einer in einer Arbeits- und Betriebsstellung seitlich von einem landwirtschaftlichem Trägerfahrzeug geführten Mäheinrichtung vorgeschlagen, die eine Anzahl um jeweils eine etwa vertikale Achse rotierende Schneidorgane umfasst, sowie mit einer Trageinrichtung mit daran angebrachten Anlenkstellen zum Anbau an eine Dreipunkthubeinrichtung des landwirtschaftlichen Trägerfahrzeuges, wobei an der Trageinrichtung zumindest ein in der Arbeits- und Betriebsstellung etwa quer zur Fahrt- und Arbeitsrichtung sich erstreckenden Tragarm angelenkt ist, an dem die Mäheinrichtung schwenkbar gehaltert ist und durch den eine Lageveränderung der Mäheinrichtung aus einer etwa bodenparallelen, seitlich von dem Trägerfahrzeug geführten Arbeits- und Betriebsstellung in eine etwa vertikal ausgerichtete Transportstellung durchführbar ist, wobei zumindest eine der der Trageinrichtung zugeordneten Anlenkstellen aus einer Ausgangslage heraus in eine der Fahrt- und Arbeitsrichtung entsprechenden Richtung nachgiebig mit der Trageinrichtung verbunden ist und die Ausgangslage zumindest einer der der Trageinrichtung zugeordneten Anlenkstellen ihrerseits in Bezug zur Trageinrichtung in oder entgegen der Fahrt- und Arbeitsrichtung verstellbar ausgebildet ist.

Durch diese erfindungsgemäße Ausbildung zumindest einer der Anlenkstellen der Trageinrichtung wird es dem Benutzer derartiger Mäheinrichtungen ermöglicht, mit minimalem konstruktivem Aufwand ein Anpassung der Mähmaschine an unterschiedliche landwirtschaftliche Trägerfahrzeuge zu schaffen, die unterschiedliche Geometrien der Dreipunkthubeinrichtung oder auch unterschiedliche Bereifungsgrößen berücksichtigt und damit einhergehend eine effektive Anfahrsicherung der Mäheinrichtung gegen Steine im Boden oder dgl. Hindernisse bietet. Beim Anbau derartiger Mähmaschinen, insbesondere dann, wenn zu beiden Seiten der Trageinrichtung eine Mäheinrichtung vorgesehen ist, ist es besonders wichtig, dass die Mähmaschine in ihrer angebauten Stellung möglichst eng an die hintere Kontur des Trägerfahrzeuges heran gerückt ist, damit der Gewichtseinfluss der Mähmaschine auf die Achslasten des Trägerfahrzeuges gering gehalten wird. Einfache Ausführungsformen der Erfindung können dabei von einer translatorischen Verstellung eines Aufnahmezapfens der Anlenkstellen der Trageinrichtung in oder entgegen der Fahrt- und Arbeitsrichtung der Mähmaschine ausgehen. Es ist aber auch vorstellbar, dass diese Verstellung über eine schwenkbeweglich veränderbare Lenkeranordnung ausführbar ist.

In einer vorteilhaften Ausführungsform besteht die Lenkeranordnung dazu aus einem unteren Lenker, der die nachgiebige Verbindung zwischen der Anlenkstelle für einen Unterlenker der Dreipunkthubeinrichtung und der Trageinrichtung der Mäheinrichtung ausbildet. In einer Ausführungsform mit jeweils einer Mäheinrichtung an beiden Seiten der Trageinrichtung enthält jede Lenkeranordnung mit der jeweiligen Anlenkstelle eine nachgiebige Verbindung zur Bereitstellung der Anfahrsicherung gegenüber Steinen oder ähnlichen Hindernissen. Ein weiterer Lenker der Lenkeranordnung dient der Halterung des Aufnahmezapfens zur Aufnahme eines Unterlenkers der Dreipunkthubeinrichtung. Hierzu ist der weitere Lenker an der dem Trägerfahrzeug zugewandeten Seite der Trageinrichtung schwenkbeweglich in einer Halterung der Trageinrichtung aufgehängt. Im Falle einer Havarie einer Mäheinrichtung beispielsweise mit einem aus dem Boden herausragenden Stein wird es durch die Berührung der Mäheinrichtung mit dem Stein aufgrund der Wirkung der nachgiebigen Verbindung des unteren Lenkers der Lenkeranordnung ermöglicht, dass die Mäheinrichtung in einer der Fahrt- und Arbeitsrichtung entgegen gesetzten Richtung nach rückwärts verschwenkt und somit dem Hindernis ausweichen kann. Diese nachgiebige Abstützung kann durch die Kraftwirkung eines Kraftspeichers, beispielsweise einer Feder geregelt sein. Bei vorteilhaften Ausführungen wird eine Haltekraft vorgegeben, so dass erst beim Überschreiten dieser Haltekraft eine nachgiebige Verlängerung des unteren Lenkers der Lenkeranordnung eintreten kann. In Bezug auf die Anpassung des Abstandes zwischen der Mäheinrichtung und der hinteren Kontur des landwirtschaftlichen Trägerfahrzeuges ist zur Arretierung des unteren Lenkers der Lenkeranordnung unterhalb der Trageinrichtung eine Halterung mit einer Mehrzahl von Bohrungen vorgesehen, so dass durch das Anbringen des unteren Lenkers in einer der Bohrungen eine Verstellung des Abstandes zwischen dem Aufnahmezapfen einer jeden Anlenkstelle und der Trageinrichtung der Mäheinrichtung durchführbar ist.

In einer vorteilhaften Weiterbildung der Erfindung kann es vorgesehen sein, dass der weitere Lenker der Lenkeranordnung hinsichtlich seiner schwenkbeweglichen Anbringung an der Trageinrichtung der Mäheinrichtung so gestaltet ist, dass die Schwenkachse des weiteren Lenkers schräg auf die jeweils andere Anlenkstelle an der Trageinrichtung ausgerichtet ist. Diese Gestaltung erleichtert die Schwenkbewegung der Mäheinrichtung nach rückwärts während des Ausweichvorganges gegenüber einem Stein oder dgl. Hindernis.

Die Erfindung soll nun anhand eines Ausführungsbeispiels näher erläutert werden:

In der Zeichnung zeigt:
- **Fig.1:**: eine perspektivische, teilweise abgebrochen dargestellte Ansicht auf eine erfindungsgemäße Mähmaschine mit einer seitlich von der Fahrspur eines landwirtschaftlichen Trägerfahrzeuges geführten Mäheinrichtung;
- **Fig.2:**: eine perspektivische, teilweise ausgebrochen dargstellte Ansicht der Mähmaschine nach Fig. 1;

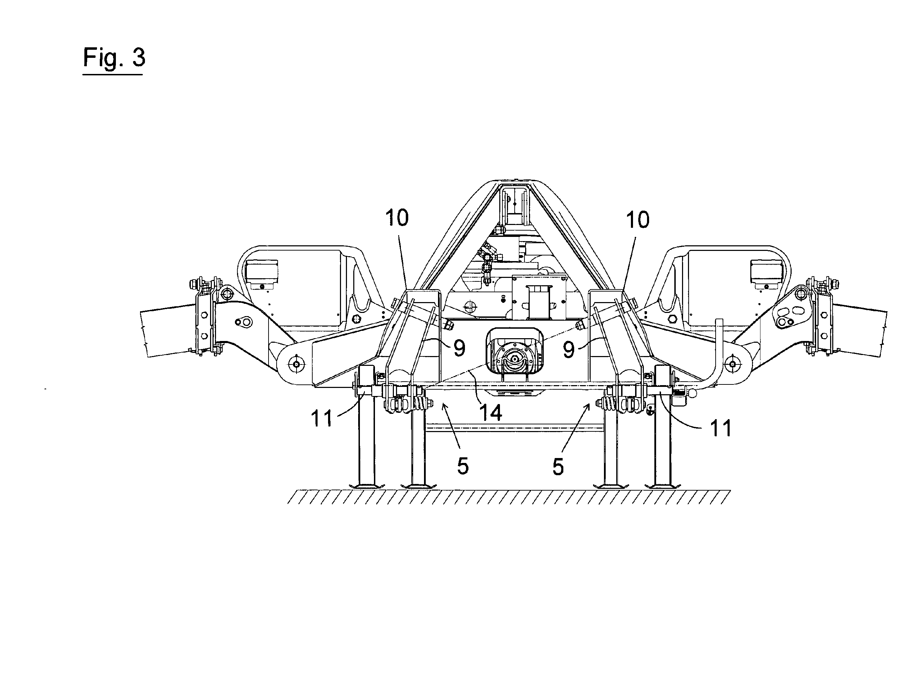

- **Fig.3:**: eine Vorderansicht auf eine Mähmaschine nach Fig. 1;

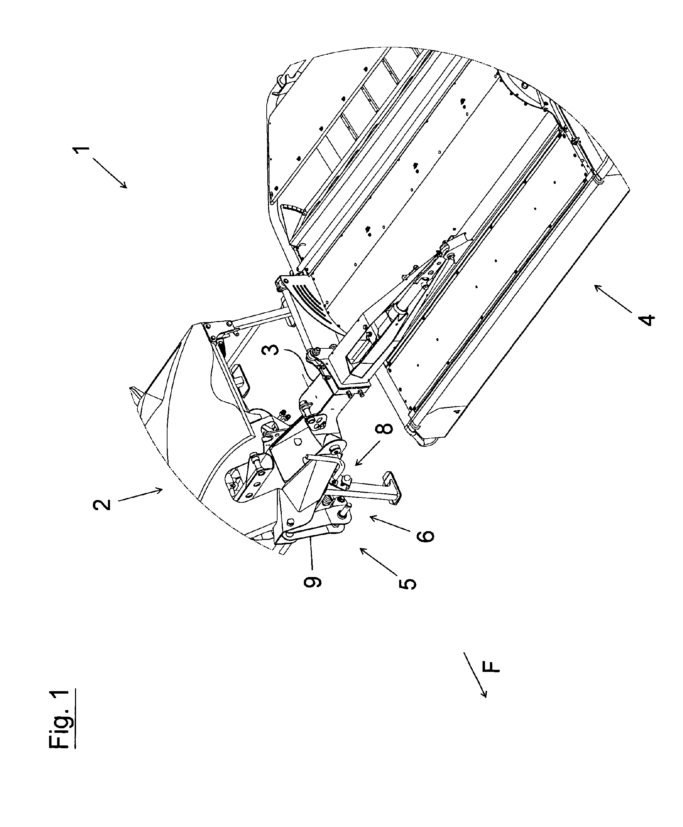

Ein Ausführungsbeispiel einer erfindungsgemäßen Mähmaschine 1 ist in der Fig. 1 näher veranschaulicht und umfasst eine Trageinrichtung 2 zur Ankoppelung der Mähmaschine 1 an ein nicht dargestelltes landwirtschaftliches Trägerfahrzeuges, beispielsweise in der Art eines landwirtschaftlichen Traktors, wobei an der in Bezug zur Fahrt- und Arbeitsrichtung F der Mähmaschine 1 linken Seite der Trageinrichtung 2 ein Tragarm 3 zur schwenkbaren Halterung der Mäheinrichtung 4 angelenkt ist. Die Mäheinrichtung 4 befindet sich in dieser Darstellung in einer im Wesentlichen bodenparallelen, seitlich von dem landwirtschaftlichen Trägerfahrzeug geführten Arbeits- und Betriebsstellung. In entsprechend spiegelbildlicher Position kann der Trageinrichtung eine weitere Mäheinrichtung 4 zugeordnet sein, so dass dann in Zusammenwirkung mit einer in der Front des landwirtschaftlichen Trägerfahrzeuges angehängten Mäheinrichtung eine sogenannte Triple-Kombination entstanden ist. Im Betrieb können dann zum Ernten von Gras oder dgl. Erntegüter die Mäheinrichtungen 4 der Mähmaschine 1 gleitend über die Oberfläche einer Feld- oder Wiesenfläche bewegt werden, wobei um eine etwa vertikale Achse rotierende Schneidorgane der Mäheinrichtungen 4 für das Abmähen des Erntegutes vorgesehen sind. Aus der Arbeits- und Betriebsstellung ist die Mäheinrichtung 4 durch eine Lageveränderung des schwenkbeweglichen Tragarmes 3 in eine im Wesentlichen eine etwa vertikale Erstreckung der Mäheinrichtung 4 beinhaltende Transportstellung überführbar.

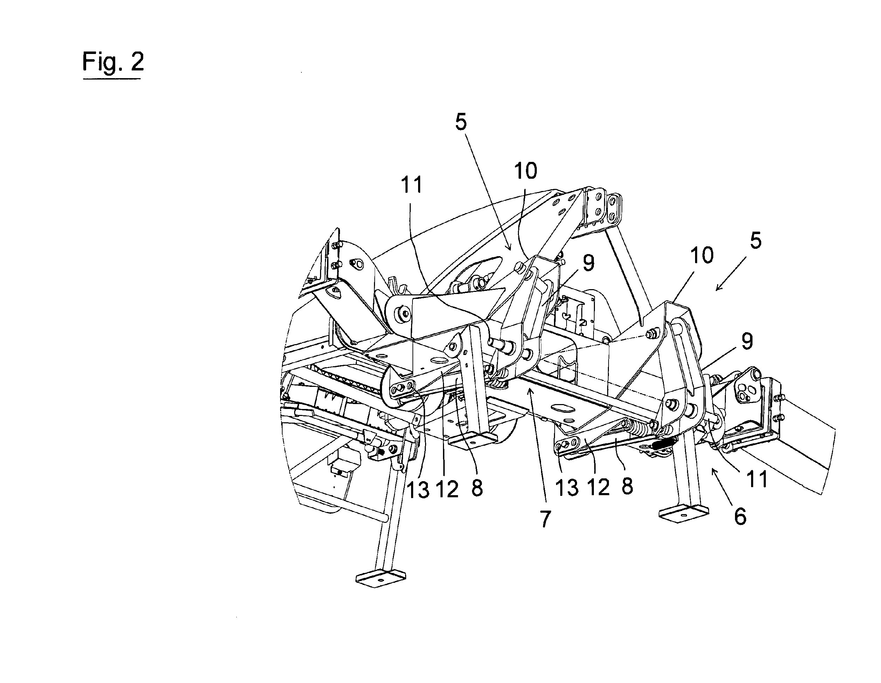

Wie insbesondere der Fig. 2 zu entnehmen ist, umfasst die Trageinrichtung 2 der Mähmaschine 1 zwei Lenkeranordnungen 5, welche die Anlenkstellen 6,7 zur Aufnahme von Unterlenkern einer Dreipunkthubeinrichtung des landwirtschaftlichen Trägerfahrzeuges ausbilden. Dazu besteht jede Lenkeranordnung 5 aus einem unteren Lenker 8 und einem weiteren Lenker 9, wobei die weiteren Lenker 9 schwenkbeweglich an einer Halterung 10 aufgehängt sind. Zur Verbindung der Mähmaschine 1 mit dem landwirtschaftlichen Trägerfahrzeug weisen die weiteren Lenker 9 Aufnahmezapfen 11 auf, auf die beim Anbau der Mähmaschine 1 nicht dargestellte Unterlenker der Dreipunkthubeinrichtung aufgesteckt werden können. Zur Arretierung der unteren Lenker 8 der Lenkeranordnung 5 an der Trageinrichtung 2 ist unterhalb der Trageinrichtung 2 eine Halterung 12 mit einer Mehrzahl von Bohrungen 13 vorgesehen, wobei die Halterung 12 aus zwei parallel zueinander angebrachten Laschen gebildet sein kann. Mit der vorstehend beschriebenen, im vorderen, unteren Bereich der Trageinrichtung 2 der Mähmaschine 1 angeordneten Lenkeranordnung 5 ist eine Vorrichtung geschaffen, welche sich durch einen geringen baulichen und damit konstruktiven Aufwand auszeichnet und dabei jedoch zwei Funktionen in einer gemeinsamen Baueinheit ausführt. Im Falle einer Havarie einer Mäheinrichtung 4, beispielsweise mit einem aus dem Boden herausragenden Stein wird es durch die Berührung der Mäheinrichtung 4 mit dem Stein aufgrund der Wirkung der nachgiebigen Verbindung des unteren Lenkers 8 der Lenkeranordnung 5 ermöglicht, dass die Mäheinrichtung 4 in einer der Fahrt- und Arbeitsrichtung F entgegen gesetzten Richtung nach rückwärts verschwenkt und somit dem Hindernis ausweichen kann. Diese nachgiebige Abstützung kann durch die Kraftwirkung eines Kraftspeichers, beispielsweise einer Feder geregelt sein. Bei vorteilhaften Ausführungen wird eine Haltekraft vorgegeben, so dass erst beim Überschreiten dieser Haltekraft eine nachgiebige Verlängerung des unteren Lenkers 8 der Lenkeranordnung 5 eintreten kann. In Bezug auf die Anpassung des Abstandes zwischen der Mäheinrichtung 4 und der hinteren Kontur des landwirtschaftlichen Trägerfahrzeuges ist zur Arretierung des unteren Lenkers 8 der Lenkeranordnung 5 unterhalb der Trageinrichtung 2 eine Halterung 12 mit einer Mehrzahl von Bohrungen 13 vorgesehen, so dass durch das Anbringen des unteren Lenkers 8 in einer der Bohrungen 13 eine Verstellung des Abstandes zwischen dem Aufnahmezapfen 11 einer jeden Anlenkstelle 6,7 und der Trageinrichtung 2 der Mäheinrichtung 4 durchführbar ist.

In einer vorteilhaften Weiterbildung der Erfindung kann es vorgesehen sein, dass der weitere Lenker 9 der Lenkeranordnung 5 hinsichtlich seiner schwenkbeweglichen Anbringung an der Trageinrichtung 2 der Mäheinrichtung 4 so gestaltet ist, dass die Schwenkachse 14 des weiteren Lenkers 9 schräg auf die jeweils andere Anlenkstelle 6,7 an der Trageinrichtung 2 ausgerichtet ist. Diese Gestaltung erleichtert die Schwenkbewegung der Mäheinrichtung 4 nach rückwärts während des Ausweichvorganges gegenüber einem Stein oder dgl. Hindernis.

## Patentansprüche

1. Mähmaschine mit zumindest einer in einer Arbeits- und Betriebsstellung seitlich von einem landwirtschaftlichem Trägerfahrzeug geführten Mäheinrichtung (4), die eine Anzahl um jeweils eine etwa vertikale Achse rotierende Schneidorgane umfasst, sowie mit einer Trageinrichtung (2) mit daran angebrachten Anlenkstellen (6, 7) zum Anbau an eine Dreipunkthubeinrichtung des landwirtschaftlichen Trägerfahrzeuges, wobei an der Trageinrichtung (2) zumindest ein in der Arbeits- und Betriebsstellung etwa quer zur Fahrt- und Arbeitsrichtung (F) sich erstreckender Tragarm (3) angelenkt ist, an dem die Mäheinrichtung (4) schwenkbar gehaltert ist und durch den eine Lageveränderung der Mäheinrichtung (4) aus einer etwa bodenparallelen, seitlich von dem Trägerfahrzeug geführten Arbeits- und Betriebsstellung in eine etwa vertikal ausgerichtete Transportstellung durchführbar ist, wobei zumindest eine der der Trageinrichtung (2) zugeordneten Anlenkstellen (6,7) aus einer Ausgangslage heraus in eine der Fahrt- und Arbeitsrichtung (F) entsprechenden Richtung nachgiebig mit der Trageinrichtung (2) verbunden ist, **dadurch gekennzeichnet, dass** die Ausgangslage zumindest einer der der Trageinrichtung (2) zugeordneten Anlenkstellen (6,7) ihrerseits in Bezug zur Trageinrichtung (2) in oder entgegen der Fahrt- und Arbeitsrichtung (F) verstellbar ausgebildet ist.

2. Mähmaschine nach Anspruch 1, **dadurch gekennzeichnet, dass** zumindest eine der der Trageinrichtung (2) zugeordneten Anlenkstellen (6,7) aus einer Ausgangslage heraus in eine der Fahrt- und Arbeitsrichtung (F) entsprechenden Richtung entgegen der Einwirkung der Kraft eines Kraftspeichers nachgiebig mit der Trageinrichtung (2) verbunden ist, wobei die Ausgangslage zumindest einer der der Trageinrichtung (2) zugeordneten Anlenkstellen (6,7) ihrerseits in Bezug zur Trageinrichtung (2) in oder entgegen der Fahrt- und Arbeitsrichtung (F) verstellbar ausgebildet ist.

3. Mähmaschine nach Anspruch 1, **dadurch gekennzeichnet, dass** zumindest eine der der Trageinrichtung (2) zugeordneten Anlenkstellen (6,7) aus einer Ausgangslage heraus in eine der Fahrt- und Arbeitsrichtung (F) entsprechenden Richtung erst nach dem Überschreiten einer vorbestimmten Haltekraft nachgiebig mit der Trageinrichtung (2) verbunden ist, wobei die Ausgangslage zumindest einer der der Trageinrichtung (2) zugeordneten Anlenkstellen (6,7) ihrerseits in Bezug zur Trageinrichtung (2) in oder entgegen der Fahrt- und Arbeitsrichtung (F) verstellbar ausgebildet ist.

4. Mähmaschine nach einem der Ansprüche 1 bis 3, **dadurch gekennzeichnet, dass** sowohl die aus der nachgiebigen Verbindung zumindest einer der Anlenkstellen (6,7) mit der Trageinrichtung (2) resultierende Bewegung als auch die aus der Verstellung der Ausgangslage zumindest einer der Anlenkstellen (6,7) translatorisch erfolgt.

5. Mähmaschine nach einem der Ansprüche 1 bis 3, **dadurch gekennzeichnet, dass** sowohl die aus der nachgiebigen Verbindung zumindest einer der Anlenkstellen (6,7) mit der Trageinrichtung (2) resultierende Bewegung als auch die aus der Verstellung der Ausgangslage zumindest einer der Anlenkstellen (6,7) schwenkbeweglich ausgeführt wird.

6. Mähmaschine nach einem der Ansprüche 1 bis 5, **dadurch gekennzeichnet, dass** zumindest eine der Anlenkstellen (6,7) als eine Lenkeranordnung (5) ausgeführt ist.

7. Mähmaschine nach einem der Ansprüche 1 bis 6, **dadurch gekennzeichnet, dass** zumindest eine der Anlenkstellen (6,7) als eine Lenkeranordnung (5) ausgeführt ist, bei der ein unterer Lenker (8) die nachgiebige Verbindung zur Trageinrichtung ausbildet.

8. Mähmaschine nach Anspruch 7, **dadurch gekennzeichnet, dass** der untere Lenker (8) der Lenkeranordnung (5) in einer Haltevorrichtung (12) mit einer Mehrzahl von Bohrungen (13) arretierbar ist.

9. Mähmaschine nach einem der Ansprüche 6 bis 8, **dadurch gekennzeichnet,**
**dass** die Lenkeranordnung (5) einen weiteren Lenker (9) umfasst, welcher einen Aufnahmezapfen (11) zur Aufnahme eines Unterlenkers der Dreipunkthubeinrichtung aufweist.

10. Mähmaschine nach Anspruch 9, **dadurch gekennzeichnet,**
**dass** der weitere Lenker (9) der Lenkeranordnung (5) an der dem Trägerfahrzeug zugewandten Seite der Trageinrichtung (2) in einer Halterung (10) angelenkt ist, wobei die Schwenkachse (14) des weiteren Lenkers (9) etwa den Bereich des Aufnahmezapfens (11) der jeweils anderen Anlenkstelle (6,7) schneidet.

## Claims

1. Mowing machine having at least one mowing device (4) which is guided in a work- and operating position at the side of an agricultural carrier vehicle and comprises a number of cutting elements, each of which rotates around an approximately vertical axis, and having a support device (2) having articulation points (6, 7) attached thereto for attaching to a three-point lifting device of the agricultural carrier vehicle, at least one support arm (3) being articulated to the support device (2), which support arm, when in the work- and operating position, extends approximately transversely to the travel- and work direction (F), on which support arm the mowing device (4) is pivotally mounted and by means of which support arm a position of the mowing device (4) can be changed from a work- and operating position, which is approximately parallel to the ground and guided at the side of the carrier vehicle, into an approximately vertically orientated transport position, at least one of the articulation points (6, 7) assigned to the support device (2) being connected to the support device (2) so as to be flexible out of a starting position in a direction corresponding to the travel- and work direction (F), **characterised in that** the starting position of at least one of the articulation points (6, 7) assigned to the support device (2) is for its part formed so as to be adjustable in or counter to the travel- and work direction (F), relative to the support device (2).

2. Mowing machine according to claim 1, **characterised in that** at least one of the articulation points (6, 7) assigned to the support device (2) is connected to the support device (2) so as to be flexible out of a starting position in a direction corresponding to the travel- and work direction (F) counter to the influence of the energy of an energy accumulator, the starting position of at least one of the articulation points (6, 7) assigned to the support device (2) for its part being formed so as to be adjustable in or counter to the travel- and work direction (F), relative to the support device (2).

3. Mowing machine according to claim 1, **characterised in that** at least one of the articulation points (6, 7) assigned to the support device (2) is connected to the support device (2) so as to be flexible out of a starting position in a direction corresponding to the travel- and work direction (F) only when a predetermined holding force has been exceeded, the starting position of at least one of the articulation points (6, 7) assigned to the support device (2) for its part being formed so as to be adjustable in or counter to the travel- and work direction (F), relative to the support device (2).

4. Mowing machine according to any of claims 1 to 3, **characterised in that** both the movement resulting from the flexible connection of at least one of the articulation points (6, 7) to the support device (2), and the movement resulting from the adjustment of the starting position of at least one of the articulation points (6, 7), are translatory.

5. Mowing machine according to any of claims 1 to 3, **characterised in that** both the movement resulting from the flexible connection of at least one of the articulation points (6, 7) to the support device (2), and the movement resulting from the adjustment of the starting position of at least one of the articulation points (6, 7), are executed as a pivoting movement.

6. Mowing machine according to any of claims 1 to 5, **characterised in that** at least one of the articulation points (6, 7) is configured as a linkage arrangement (5).

7. Mowing machine according to any of claims 1 to 6, **characterised in that** at least one of the articulation points (6, 7) is configured as a linkage arrangement (5), in which a lower linkage (8) forms the flexible connection to the support device.

8. Mowing machine according to claim 7, **characterised in that** the lower linkage (8) of the linkage arrangement (5) can be locked in a holding means (12) using a plurality of holes.

9. Mowing machine according to any of claims 6 to 8, **characterised in that** the linkage arrangement (5) comprises a further linkage (9), which comprises a receiving pin (11) for receiving a lower linkage of the three-point lifting device.

10. Mowing machine according to claim 9, **characterised in that** the further linkage (9) of the linkage arrangement (5) is articulated, in a holder (10), on the side of the support device (2) facing the carrier vehicle, the pivot axis (14) of the further linkage (9) approximately intersecting the region of the receiving pin (11) of each of the other articulation points (6, 7).

## Revendications

1. Faucheuse comportant au moins une installation de coupe (4) conduite en position de travail et de fonctionnement latéralement par un véhicule agricole porteur, cette installation de coupe ayant un certain nombre d'organes de coupe tournant respectivement autour d'un axe sensiblement vertical ainsi qu'une installation de support (2) avec des points d'articulation (6, 7) pour être installée sur une installation de levage en trois points du véhicule agricole porteur,
* l'installation de support (2) comportant un bras de support (3) articulé sur l'installation et s'étendant sensiblement transversalement à la direction de déplacement et de travail (F) en position de travail et de fonctionnement, l'installation de coupe (4) étant montée pivotante sur ce bras (3) et elle peut être mise dans une position de transport orientée sensiblement verticalement à partir d'une position de travail et de fonctionnement guidée sensiblement parallèlement au sol, latéralement au véhicule porteur, par un changement de position de l'installation de coupe (4),
* au moins l'un des points d'articulation (6, 7) associés à l'installation de support (2) est relié de façon souple à l'installation de support (2) à partir d'une position de sortie dans une direction correspondant à la direction de déplacement et de travail (F),
faucheuse **caractérisée en ce que**
la position de sortie d'au moins l'un des points d'articulation (6, 7) associés à l'installation de support (2) est réalisée de manière réglable par rapport à l'installation de support (2) dans la direction de déplacement et de travail (F) ou dans la direction opposée.

2. Faucheuse selon la revendication 1,
**caractérisée en ce qu'**
au moins l'un des points d'articulation (6, 7) associés à l'installation de support (2) est relié de manière souple à l'installation de support (2) en partant d'une position de sortie, dans une direction correspondant à la direction de déplacement et de travail (F), contre l'action de la force d'un accumulateur de force,
* la position de sortie d'au moins l'un des points d'articulation (6, 7) associés à l'installation de support (2) étant elle-même réalisée de manière réglable par rapport à l'installation de support (2) dans la direction de déplacement et de travail (F) ou dans la direction opposée.

3. Faucheuse selon la revendication 1,
**caractérisée en ce qu'**
au moins l'un des points d'articulation (6, 7) associés à l'installation de support (2) est relié de manière souple à l'installation de support (2) à partir d'une position de sortie dans une direction correspondant à la direction de déplacement et de travail (F) seulement après le dépassement d'une force de retenue, prédéfinie,
* la position de sortie d'au moins l'un des points d'articulation (6, 7) associés à l'installation de support (2) étant elle-même réalisée de manière réglable par rapport à l'installation de support (2) dans la direction de déplacement et de travail (F) ou dans la direction opposée.

4. Faucheuse selon l'une des revendications 1 à 3,
**caractérisée en ce qu'**
à la fois le mouvement résultant de la liaison souple d'au moins l'un des points d'articulation (6, 7) avec l'installation de support (2) et aussi le déplacement de la position de sortie d'au moins l'un des points d'articulation (6, 7) se font par translation.

5. Faucheuse selon l'une des revendications 1 à 3,
**caractérisée en ce qu'**
à la fois le mouvement résultant de la liaison souple d'au moins l'un des points d'articulation (6, 7) avec l'installation de support (2) et aussi le déplacement de la position de sortie d'au moins l'un des points d'articulation (6, 7) se font par un mouvement de pivotement.

6. Faucheuse selon l'une des revendications 1 à 5,
**caractérisée en ce qu'**
au moins l'un des points d'articulation (6, 7) est réalisé comme un dispositif à bras (5).

7. Faucheuse selon l'une des revendications 1 à 6,
**caractérisée en ce qu'**
au moins l'un des points d'articulation (6, 7) est réalisé comme un dispositif à bras (5) dont au moins un bras inférieur (8) réalise la liaison souple avec l'installation de support.

8. Faucheuse selon la revendication 7,
**caractérisée en ce que**
le bras inférieur (8) du dispositif de bras (5) se bloque dans un dispositif de fixation (12) muni de plusieurs perçages (13).

9. Faucheuse selon l'une des revendications 6 à 8,
**caractérisé en ce que**
le dispositif de bras (5) comporte un autre bras (9) ayant une broche (11) pour recevoir le bras inférieur de l'installation de levage à trois points.

10. Faucheuse selon la revendication 9,
**caractérisée en ce que**
l'autre bras (9) du dispositif de bras (5) est articulé dans une fixation (10) sur le côté de l'installation de support (2) tourné vers le véhicule transporteur,
* l'axe de pivotement (14) de cet autre bras (9) coupant sensiblement la région de la broche (11) de l'autre point d'articulation (6, 7).
